# EUROPEAN PATENT APPLICATION

(11) **EP 1 698 818 A2**
(43) Date of publication of application: **06.09.2006**
(21) Application number: 06110678.7
(22) Date of filing: 03.03.2006
(51) Int. Cl.: F16L 5/02

(54) **Device for sealingly pass a cable through a wall**

(30) Priority: 04.03.2005 IT MO20050051
(71) Applicant: Zenit Investments S.p.A., 41100 Modena (IT)
(72) Inventor: Bottan, Lorenzo, 41100, Modena (IT); Bottan, Davide, 41100, Modena (IT)
(74) Representative: Luppi, Luigi

(57) **Abstract**

The fairlead device (9), particularly for closed containing means (1) provided at least with a communication opening (8) between the exterior and the interior comprises an elastic element (10) traversable by cables that is housable in said opening (8) and that has an external surface such as to adhere perimetrally to said opening (8) closing it.

## Description

The present invention relates to a device, particularly for walls traversed by openings through which cables have to pass.

In some tanks, and particularly in buriable ones that are used to collect sewage, when the positioning height of the tanks is lower than the level of the urban mains sewer, pumps are located to empty them cyclically.

The pumps' power supply is electric and is automatically actuated and deactuated by means of pulses generated by floats, the latter too being located inside the tanks, which are connected to the pumps and, by rising progressively with the rising of the level of the sewage, when a preset limit filling level is reached, actuate the power supply to the pumps, which start the emptying actions, pushing the sewage to the mains sewer through suitable piping connecting with the latter.

The tanks consist of two portions: a lower basin and an upper closing lid, which is openable for inspections.

Between the edges of the lid and the edges of the lower portion perimeter seals are provided for preventing accidental leaks of the collected sewage and above all the escape of unpleasant odours.

In order to provide the pumps with the electric power supply, and to transmit the actuating or deactuating pulses thereof, it is necessary for the supply cables and the cables carrying the electric pulses, all coming from the exterior, to traverse the tanks to penetrate inside the latter and connect with the pumps and the floats.

Simultaneously, it is necessary for the hermetic seal of the tanks to be maintained at the traversing points of the cables.

The traversing points, by convenience, are currently made by obtaining suitable transverse breaks in the upper edges of the walls of the tanks, where the latter join the edges of the respective lids.

The size and the depth of the breaks, which have a side that is open towards the lid, are such as to enable both the cables to be passed through and elastic sleeve seals to be forcedly inserted that are fitted on the cables and surround the portions thereof that are placed in the breaks.

When the cables and the seals are definitively inserted and positioned in the respective breaks, the open sides of the latter are closed with corresponding cable-clamp plates that restore the substantial continuity of the upper edges of the basins and that maintain the forced contact and seal between the edges of the breaks and the sleeve seals of the corresponding cables.

This prior art has some drawbacks.

A first drawback is due to the fact that over time, owing to the corrosive conditions of use, the sleeve seals, which are generally of limited thickness, tend to deteriorate and become porous, letting the unpleasant odours that develop in the sewage collected in the basins escape to the exterior.

A second drawback is that the traversing points of the cables require a series of elements to be assembled, such as the sleeve seals, the plates and the fixing screws of the latter, with noticeable losses of time for each assembly and which are multiplied each time that it is necessary to maintain or replace the sleeve seals.

An object of the invention is to improve prior-art fairleads.

A further object of the invention is to make a fairlead device that is noticeably longer lasting.

Another object of the invention is to make a fairlead device that has a simplified structure with respect to the prior art that is also rapidly mountable and replaceable.

In an aspect of the invention, there is provided a fairlead device, particularly for closed containing means provided with at least a communication opening between the exterior and the interior, comprising an elastic element that is traversable with cables that is housable in said at least an opening and which has an external surface such as to adhere perimetrally to said opening, closing it.

In another aspect of the invention there is provided a device, particularly for wall means provided with a through opening delimited by a perimeter edge, comprising fairlead element means sealingly traversable with cables and housable in said opening, characterised in that said fairlead element means (10) has retaining means inside said through opening.

The device can easily be traversed by cables intended to extend between the interior and the exterior of closed containing means, such as tanks and in the event of wear or damage can easily be replaced with rapidity.

Further features and advantages will become clearer from the detailed description of a device, illustrated by way of non-limitative example in the attached tables of drawings in which:
Figure 1 is a side view of a tank of buriable type;
Figure 2 is a cross-section view of a fairlead element made according to the prior art;
Figure 3 is a section view of a fairlead element made according to the invention;
Figure 4 is a longitudinal section view of the fairlead element in Figure 3 in a configuration prior to the insertion of a cable;
Figure 5 is the corresponding view in Figure 4 in a configuration subsequent to the insertion of a cable;
Figure 6 is a schematic perspective view and on a greatly enlarged scale of a pair of fairlead elements placed alongside one another between a lid and a basin of a tank and in a configuration in which they are traversed by respective cables.

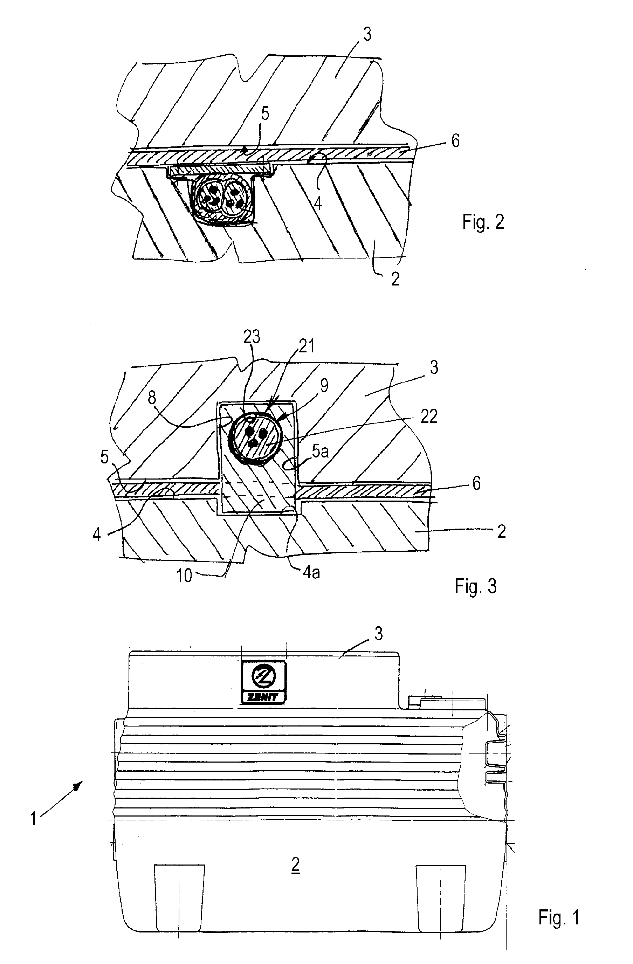

With reference to Figure 1, 1 indicates overall a tank, specifically of buriable type.

The tank 1 consists of a basin 2 and of a lid 3 that closes the lower portion 2 from above.

As is visible in Figures 2 to 6, between an upper edge 4 of the basin 2 and the corresponding contact edge 5 of the lid 3, there is arranged a longitudinal seal 6, the lower portion of the cross-section of which is contained in a groove 7 obtained along the perimeter of the upper edge 4 of the basin 2.

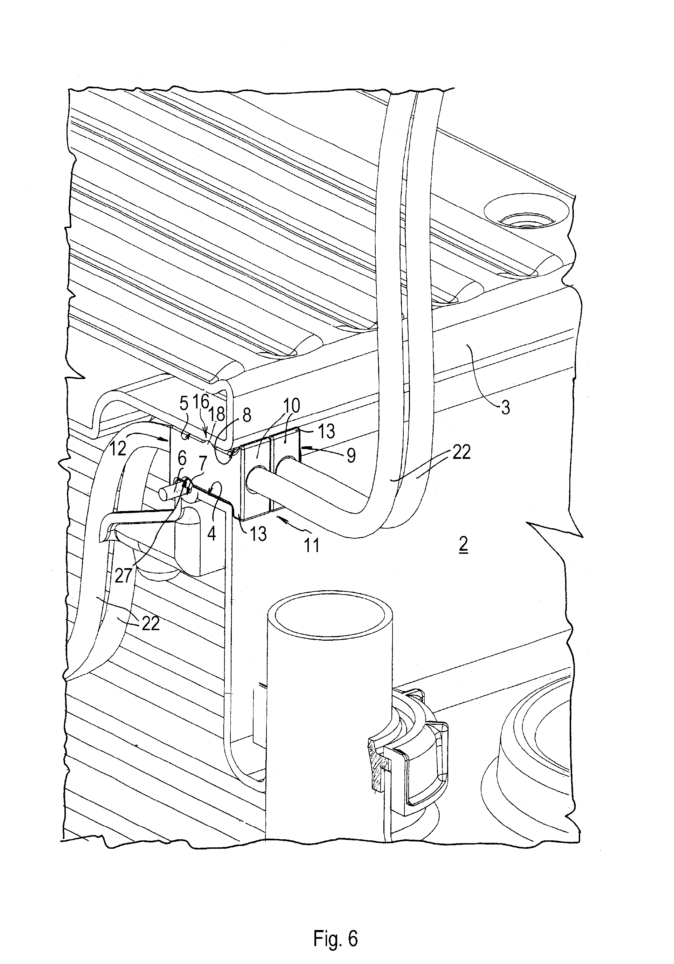

With reference to Figure 6, it should be noted that in a side of the tank 1 there is obtained a transverse opening 8 that enables the interior of the tank 2 to communicate with the exterior.

In the opening 8, that in the preferred embodiment has an upper part obtained in the lid 3 defining a recess 5a, and a lower part obtained in the basin 2 defining a recess 4a, a fairlead device 9 is insertible that comprises a series of fairlead elements 10 placed alongside one another that have bodies with a substantially parallelepipedon shape that have first ends 11 facing the exterior and opposite second ends 12 facing the interior of the tank 1.

The first ends 11 have respective enlargements 13 joined to the bodies of the fairlead elements 10 and arranged to rest against abutments 15' obtained in the lower edge facing the exterior of the recess 4a, whereas the second opposite ends 12 have respective lips 14 projecting transversely, arranged to rest on corresponding abutments 15 obtained in the edges of the recess 4a facing the interior of the lower portion 2. Between each fairlead element 10 and at least the.edge 5 of the lid 3 retaining means 16 of the fairlead elements 10 is provided in the transverse opening 8; these retaining means 16 comprises convex means 17, essentially comprising a beading 18 that protrudes from the bodies of the fairlead elements 10, and corresponding concave means 19, comprising a channel 20 obtained in the edge 5 of the lid 3.

The bodies of the fairlead elements 10 are traversed longitudinally by passage means 21, for passing through cables 22.

In detail, the passage means 21 comprises at least a cylindrical channel 23 which has an inlet portion 24 facing the exterior, that has a diameter marked "ø₁" that substantially coincides with a diameter "ø₂" of cables 22 to be inserted; the latter is less than the first diameter "ø₁".

Before a cable 22 is introduced into the respective cylindrical channel 23, the latter, near the opposite second end 12 has a diaphragm 26 that is perforable when a cable 22 is introduced.

The operation of the fairlead device is as follows: it is inserted into the recess 4a of the opening 8 when the lid 3 is removed from the basin 2.

A power supply cable 22 is then inserted into the cylindrical channel 23 for a known pump housed in the basin 2, or for conveying to the exterior signals coming from a known float, which is also placed inside the basin 2 and is suitable for interrupting or allowing the electric power supply to the pump.

The cable 22 is inserted in a substantially slidable manner into the first portion 24 that has a diameter "ø₁" substantially coinciding with the diameter "ø₂" of the cable 22 to be inserted.

Furthermore, to reach the interior of the basin 2, the cable 22 must also perforate the diaphragm 26 that, even if it is perforated, constitutes a further annular seal that envelops the external surface of the cable 22 adhering thereto.

When the cable, or the cables 22, are positioned and connected, the lid 3 is placed on the basin 2 closing it in a hermetic manner and locking the fairlead element 10 between the recesses 4a and 5a of the opening 8.

The fairlead element 10 is retained in the opening 8 both by the beading 18 that is coupled in the channel 20, and by the lip 14 that rests on the abutment 15; thus even accidental traction exerted on a cable 22 outwardly is contrasted by the lip 14 that rests against the abutment 15 and by the beading 18 that rests on the channel 20, preventing the accidental escape of the fairlead element 10 from the opening 8.

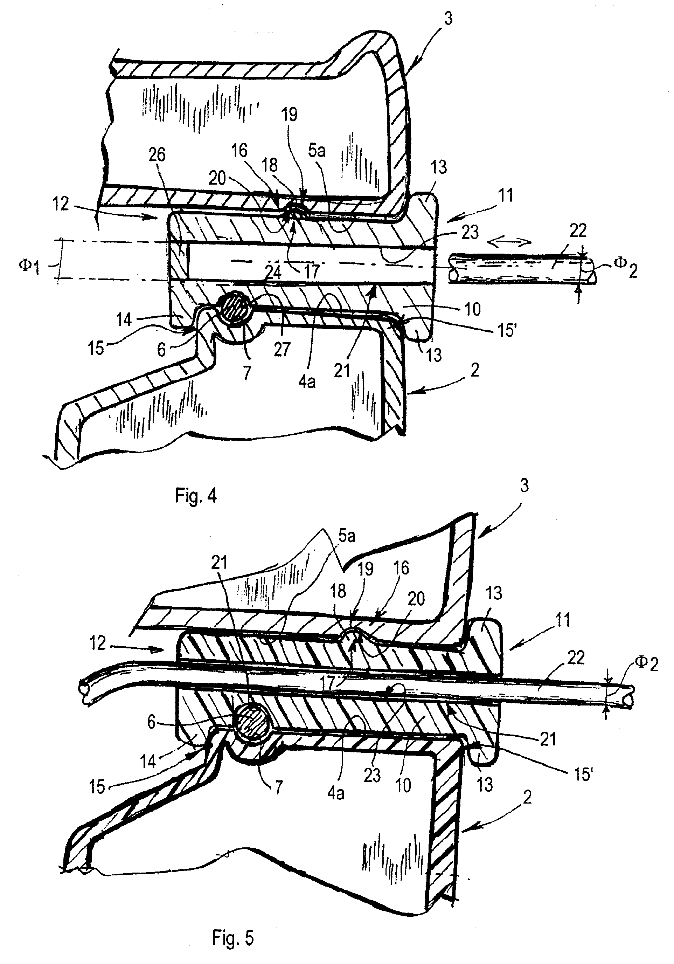

The fairlead element 10 can also have, as visible in Figures 4, 5, 6, a transverse groove 27 obtained at the seal 6 of the corresponding housing groove 7, to enable the continuity of the seal 6 to be maintained and to make it in one piece.

If maintenance tasks have to be performed or the fairlead elements 10 has to be completely replaced it is sufficient to remove the lid 3 from the basin 2 and smoothly extract the latter from the respective openings 8, removing them upwards, to be handled independently of one another and to reinsert new fairlead elements 10 into the respective opening 8 in place of the damaged ones.

## Claims

1. Device, particularly for wall means (2, 3) provided with a through opening (8) delimited by a perimeter edge (4a, 5a), comprising fairlead element means (10) sealingly traversable with cables (22) and housable in said opening (8), **characterised in that** said fairlead element means (10) has at least a cross section in which a contour of said fairlead element means (10) such as to adhere to the entire extent of said perimeter edge (4a, 5a) is defined.

2. Device according to claim 1, wherein said fairlead element means (10) comprises a plurality of fairlead elements (10) that are adjacent to one another.

3. Device according to claim 2, wherein said plurality of fairlead elements (10) has fairlead elements (10) having a common face.

4. Device according to any preceding claim, wherein said fairlead element means (10) is made of elastic material.

5. Device according to any preceding claim, wherein said wall means (2, 3) forms a container (1) part.

6. Device according to claim 5, wherein said container (1) is a sewage container.

7. Device according to claim 5, or 6, wherein said fairlead element means (10), comprises:
― a first end (11) facing the exterior and an opposite second end (12) facing the interior of said container (1),
― passage means (21) of cables (22) obtained longitudinally in said fairlead element means (10) between said first end (11) and said second end (12).

8. Device according to any preceding claim, and furthermore comprising retaining means (13; 14; 16, 17, 18, 19; 6, 7, 27) of said fairlead element means (10) in said opening (8).

9. Device, particularly for wall means (2, 3) provided with a through opening (8) delimited by a perimeter edge (4a, 5a), comprising fairlead element means (10) sealingly traversable with cables (22) and housable in said opening (8), **characterised in that** said fairlead element means (10) has retaining means (13; 14; 16, 17, 18, 19; 6, 7, 27) inside said through opening (8).

10. Fairlead device according to claim 8, or 9 wherein said retaining means comprises corrugated means (16, 17, 18, 19) arranged in a cooperating manner in said fairlead element means (10) and in said opening.

11. Device according to claim 10, wherein said corrugated means comprises:
― convex means (17,18) protruding from said fairlead element means (10),
― concave means (19) obtained in said at least an opening (8) at said convex means (17) and arranged for being coupled with the latter.

12. Device according to any one of claims 8 to 11, wherein said retaining means comprises a lip (13, 14) projecting transversely from at least an end (11, 12) of said fairlead element means (10) arranged to engage a corresponding abutment (15, 15') of said opening (8).

13. Device according to any one of claims 7 to 12, wherein said passage means (21) comprises a cylindrical channel (23) that has an inlet portion (24) having a diameter (ø1) substantially coinciding with a diameter (ø2) of cables (22) to be inserted.

14. Device according to claim 13, wherein said inlet portion (24) transversely has a perforable diaphragm element (26).

15. Device according to any one of claims 6 to 14, wherein said container (1) comprises a basin (2) and a closing lid (3) of said basin (2).

16. Device according to claim 15, wherein said opening (8) is formed by a recess (4a) of an upper edge (4) of said basin (2) and by a further recess (5a) of an edge (5) of the lid (3) facing said recess (4a).

17. Container **characterised in that** it is provided with at least a device according to any one of claims 1 to 16.
